# EUROPEAN PATENT APPLICATION

(11) **EP 4 656 049 A1**
(43) Date of publication of application: **03.12.2025**
(21) Application number: 25179670.2
(22) Date of filing: 29.05.2025
(51) Int. Cl.: A01N 63/30, A01N 25/04, A01P 7/00, A01P 7/04

(54) **A METHOD OF CONTROLLING INSECT PESTS**

(30) Priority: 31.05.2024 EP 24305861
(71) Applicant: UPL Mauritius Limited, Port Louis (MU)
(72) Inventor: BESSE, Samantha, 64000 Pau (FR); D'INNOCENZO, Sébastien, 08019 Barcelona (ES); TAYLOR, Miles, Cheshire, WA3 6YN (GB); LÓPEZ, David Roldán, 41728 Sevilla (ES); LECOLLINET, Grégory, 35400 Saint Malo (FR)
(74) Representative: J A Kemp LLP

(57) **Abstract**

The present disclosure relates to insect pest control. Particularly, the present disclosure relates to a method of controlling insect pests with an entomopathogenic fungus. More particularly, the present disclosure relates to a method of controlling insect pests with strains of *Beauveria bassiana* or their spores. Also provided herein, is the composition comprising said strains of *Beauveria bassiana* or their spores and use of said composition for controlling or preventing insect pests.

## Description

### TECHNICAL FIELD

The present invention relates to field of insect pest control. Particularly, the present invention relates to a method of controlling insect pests with a biological entity, such as an entomopathogenic fungus. More particularly, the present invention relates to a method of controlling insect pests with strains of *Beauveria bassiana* or their spores.

### BACKGROUND

Insect pests are one of the major threat to agriculture and non-agricultural sectors. Herbivorous insects are said to be responsible for destroying one fifth of the world's total crop production annually. Non-crop pests are a cause of disease and injury to animals and humans. Chemical insecticides have been conventionally used to control insect pests. In return, the chemical pesticide themselves pose a debilitating risk to the health of plants, crops, animals, beneficial organisms, humans and the environment. As a result, it has always been desirable to the agriculturists and non-agriculturists to find alternatives to chemical means of insect pest control.

*Beauveria bassiana* is an entomopathogenic fungus which is used as an alternative to chemical pesticides for controlling insect pests or used in Integrated Pest Management techniques along with other solutions to control insect pests from causing damage to plants, crops, animals, and humans. However, not all strains of *Beauveria bassiana* are efficacious in controlling a myriad of insect pests, both agricultural and non-agricultural. Thus, there is an unquenched need for new strains of *Beauveria bassiana* which can exert control over a wide spectrum of agricultural and non-agricultural insect pests at par with chemical insecticides or better.

Thus, an object of the present invention is to provide a method of controlling crop pests and non-crop pests with a biological entity which is efficacious as compared to the chemical pesticide. An object of the present invention is to provide a method of controlling crop pests and non-crop pests in a non-harmful manner using a biological entity, such as an entomopathogenic fungus. An object of the present invention is to provide effective control of crop pests and non-crop pests and prevent or control damage caused by them.

### BRIEF SUMMARY

With the objectives set herein, the inventors of the present invention identified strains of *Beauveria bassiana* which were able to control crop pests and non-crop pests as efficaciously or even better than the chemical pesticides. The specification herein embodies the invention and the following aspects disclose the invention.

An aspect of the present invention provides a method of controlling crop pests and non-crop pests with an entomopathogenic fungus selected from a *Beauveria bassiana* deposited as CNCM I-2960 or its spores, a *Beauveria bassiana* deposited as CNCM I-2961 or its spores, or a combination thereof.

In an aspect, there is provided a method of controlling or preventing crop pests and non-crop pests, and damage caused by said crop pests and non-crop pests, said method comprising contacting a crop, a plant or a part thereof, a locus or said pests with an entomopathogenic fungus selected from a *Beauveria bassiana* deposited as CNCM I-2960 or its spores, a *Beauveria bassiana* deposited as CNCM I-2961 or its spores, or a combination thereof.

In an aspect, there is provided a method of controlling or preventing crop pests and non-crop pests, and damage caused by said crop pests and non-crop pests, said method comprising contacting a crop, a locus or said pests with a composition comprising an entomopathogenic fungus selected from a *Beauveria bassiana* deposited as CNCM I-2960 or its spores, a *Beauveria bassiana* deposited as CNCM I-2961 or its spores, or a combination thereof; and an agriculturally acceptable excipient.

An aspect of the present invention provides a use of an entomopathogenic fungus selected from a *Beauveria bassiana* deposited as CNCM I-2960 or its spores, a *Beauveria bassiana* deposited as CNCM I-2961 or its spores, or a combination thereof, for controlling or preventing crop pests and non-crop pests, and damage caused by said crop pests and non-crop pests.

An aspect of the present invention provides a composition comprising an entomopathogenic fungus selected from a *Beauveria bassiana* deposited as CNCM I-2960 or its spores, a *Beauveria bassiana* deposited as CNCM I-2961 or its spores, or a combination thereof, and an agriculturally acceptable excipient for controlling or preventing crop pests and non-crop pests, and damage caused by said crop pests and non-crop pests.

An aspect of the present invention provides a use of a composition comprising an entomopathogenic fungus selected from a *Beauveria bassiana* deposited as CNCM I-2960 or a *Beauveria bassiana* deposited as CNCM I-2961, and an agriculturally acceptable excipient for controlling or preventing crop pests and non-crop pests, and damage caused by said crop pests and non-crop pests.

### DETAILED DESCRIPTION

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about".

Thus, before describing the present disclosure in detail, it is to be understood that this invention is not limited to particularly exemplified parameters, methods of use or composition that may of course, vary. It is also to be understood that the terminology used herein is for the purpose of describing embodiments of the invention only and is not intended to limit the scope of the invention in any manner. The use of examples anywhere in this specification including examples of any terms discussed herein is illustrative only, and in no way limits the scope and meaning of the invention or of any exemplified term. Likewise, the invention is not limited to various embodiments given in this specification. Unless otherwise defined, all technical and scientific terms used herein have the same meaning as commonly understood by one of ordinary skill in the art to which this invention pertains. In the case of conflict, the present document, including definitions will control.

Unless otherwise stated, all exact values provided herein are representative of corresponding approximate values (e.g., all exact exemplary values provided with respect to a particular factor or measurement can be considered to also provide a corresponding approximate measurement, modified by "about," where appropriate). As used herein, the term "about" refers to a measurable value such as a parameter, an amount, a temporal duration, and the like and is meant to include variations of +/-15% or less, specifically variations of +/-10% or less, more specifically variations of +/-5% or less, even more specifically variations of +/-1% or less, and still more specifically variations of +/-0.1% or less of and from the particularly recited value, in so far as such variations are appropriate to perform in the disclosure described herein.

Recitation of ranges of values are merely intended to serve as a shorthand method of referring individually to each separate value falling within the range, unless otherwise indicated herein, and each separate value is incorporated into the specification as if it were individually recited herein. All provided ranges of values are intended to include the end points of the ranges, as well as values between the end points, and are independently combinable. As used herein, all numerical values or numerical ranges include integers within such ranges and fractions of the values or the integers within ranges unless the context clearly indicates otherwise. Thus, for example, reference to a range of 90-100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth. All methods described herein can be performed in a suitable order unless otherwise indicated herein or otherwise clearly contradicted by context.

It must be noted that, as used in this specification, the singular forms "a," "an" and "the" include plural referents unless the content clearly dictates otherwise. The terms "preferred" and "preferably" refer to embodiments of the invention that may afford certain benefits, under certain circumstances.

As used herein, the terms "comprising" "including," "having," "containing," "involving," and the like are to be understood to be open-ended, i.e., to mean including but not limited to.

As used herein, the term "locus" refers to an area, a surface, a plant or a part thereof, a crop or a part thereof which is infested by or prone to infestation by insect pests. It includes any surface, habitat, breeding ground, plant, plant propagation material, soil, area, material or environment in which a crop is growing or may grow, or where the pest breeds, attacks, may breed or may attack.

An embodiment of the present invention provides a method of controlling crop pests and non-crop pests with an entomopathogenic fungus selected from a *Beauveria bassiana* deposited as CNCM I-2960, a *Beauveria bassiana* deposited as CNCM I-2961, or a combination thereof.

In an embodiment, said entomopathogenic fungus is in spore form.

In an embodiment, said entomopathogenic fungus is in mycelial or filamentous form.

Therefore, an embodiment of the present invention provides a method of controlling crop pests and non-crop pests with an entomopathogenic fungus selected from a *Beauveria bassiana* deposited as CNCM I-2960 or its spores, a *Beauveria bassiana* deposited as CNCM I-2961 or its spores, or a combination thereof.

Therefore, an embodiment of the present invention provides a method of controlling crop pests and non-crop pests with a *Beauveria bassiana* deposited as CNCM I-2960 or its spores.

Therefore, an embodiment of the present invention provides a method of controlling crop pests and non-crop pests with a *Beauveria bassiana* deposited as CNCM I-2961 or its spores.

In an embodiment, the entomopathogenic fungus is effective in controlling pests of insects from the order of the lepidopterans (Lepidoptera), for example Acronicta major, Adoxophyes orana, Aedia leucomelas, Agrotis spp. such as Agrotis fucosa, Agrotis segetum, Agrotis ypsilon; Alabama argillacea, Anticarsia gemmatalis, Anticarsia spp., Argyresthia conjugella, Autographa gamma, Barathra brassicae, Buccuiatrix thurberielia, Bupalus piniarius, Cacoecia murinana, Cacoecia podana, Capua reticulana, Carpocapsa pomonella, Cheimatobia brumata, Chilo spp. such as Chilo suppressalis; Choristoneura fumiferana, Choristoneura occidentalis, Cirphis unipuncta, Clysia ambiguella, Cnaphalocerus spp., Cydia pomonella, Dendrolimus pini, Diaphania nitidalis, Diatraea grandiosella, Earias insulana, Elasmopalpus lignosellus, Ephestia cautella, Ephestia kuehniella, Eulecanium tiliae, Eupoecilia ambiguella, Euproctis chrysorrhoea, Euxoa spp., Evetria bouliana, Feltia spp. such as Feltia subterranean; Galleria mellonella, Grapholitha funebrana, Grapholitha molesta, Helicoverpa spp. such as Helicoverpa armigera (cotton bollworm), Helicoverpa zea; Heliothis spp. such as Heliothis armigera, Heliothis virescens, Heliothis zea; Hellula undalis, Hibernia defoliaria, Hofmannophila pseudospretella, Homona magnanima, Hyphantria cunea, Hyponomeuta padella, Hyponomeuta malinellus, Keiferia lycopersicella, Lambdina fiscellaria, Laphygma spp. such as Laphygma exigua; Leucoptera coffeella, Leucoptera scitella, Lithocolletis blancardella, Lithophane antennata, Lobesia botrana, Loxagrotis albicosta, Loxostege sticticalis, Lymantria spp. such as Lymantria dispar, Lymantria monacha; Lyonetia clerkella, Malacosoma neustria, Mamestra spp. such as Mamestra brassicae; Mods repanda, Mythimna separata, Orgyia pseudotsugata, Oria spp., Ostrinia spp. such as Ostrinia nubilalis; Oulema oryzae, Panolis flammea, Pectinophora spp. such as Pectinophora gossypiella; Peridroma saucia, Phalera bucephala, Phthorimaea spp. such as Phthorimaea operculella; Phyllocnistis citrella, Phytoptus spp. Such as Phytoptus avellanae, Pieris spp. such as Pieris brassicae, Pieris rapae; Plathypena scabra, Plutella maculipennis, Plutella xylostella, Prodenia spp., Pseudaletia spp., Pseudoplusia includens, Pyrausta nubilalis, Rhyacionia frustrana, Scrobipalpula absoluta, Sitotroga cerealella, Sparganothis pilleriana, Spodoptera spp. such as Spodoptera frugiperda, Spodoptera littoralis (cotton leafworm), Spodoptera litura; Thaumatopoea pityocampa, Thermesia gemmatalis, Tinea pellionella, Tineola bisselliella, Tortrix viridana, Trichoplusia spp. such as Trichoplusia ni; Tuta absoluta, and Zeiraphera canadensis, beetles (Coleoptera), for example Acanthoscehdes obtectus, Adoretus spp., Agelastica alni, Agrilus sinuatus, Agriotes spp. such as Agriotes fuscicollis, Agriotes lineatus, Agriotes obscurus; Amphimallus solstitialis, Anisandrus dispar, Anobium punctatum, Anomala rufocuprea, Anoplophora spp. such as Anoplophora glabripennis; Anthonomus spp. such as Anthonomus grandis, Anthonomus pomorum; Anthrenus spp., Aphthona euphoridae, Apogonia spp., Athous haemorrhoidalis, Atomaria spp. such as Atomaria linearis; Attagenus spp., Aulacophora femoralis, Blastophagus piniperda, Blitophaga undata, Bruchidius obtectus, Bruchus spp. such as Bruchus lentis, Bruchus pisorum, Bruchus rufimanus; Byctiscus betulae, Callosobruchus chinensis, Cassida nebulosa, Cerotoma trifurcata, Cetonia aurata, Ceuthorhynchus spp. such as Ceuthorrhynchus assimilis, Ceuthorrhynchus napi; Chaetocnema tibialis, Cleonus mendicus, Conoderus spp. such as Conoderus vespertinus; Cosmopolites spp., Costelytra zealandica, Crioceris asparagi, Cryptorhynchus lapathi, Ctenicera ssp. such as Ctenicera destructor; Curculio spp., Dectes texanus, Dermestes spp., Diabrotica spp. such as Diabrotica 12-punctata Diabrotica speciosa, Diabrotica longicornis, Diabrotica semipunctata, Diabrotica virgifera; Epilachna spp. such as Epilachna varivestis, Epilachna vigintioctomaculata; Epitrix spp. such as Epitrix hirtipennis; Eutinobothrus brasiliensis, Faustinus cubae, Gibbium psylloides, Heteronychus arator, Hylamorpha elegans, Hylobius abietis, Hylotrupes bajulus, Hypera brunneipennis, Hypera postica, Hypothenemus spp., Ips typographus, Lachnosterna consanguinea, Lema bilineata, Lema melanopus, Leptinotarsa spp. such as Leptinotarsa decemlineata; Limonius californicus, Lissorhoptrus oryzophilus, Lissorhoptrus oryzophilus, Lixus spp., Lyctus spp. such as Lyctus bruneus; Melanotus communis, Meligethes spp. such as Meligethes aeneus; Melolontha hippocastani, Melolontha melolontha, Migdolus spp., Monochamus spp. such as Monochamus alternatus; Naupactus xanthographus, Niptus hololeucus, Oryctes rhinoceros, Oryzaephilus surinamensis, Otiorrhynchus sulcatus, Otiorrhynchus ovatus, Otiorrhynchus sulcatus, Oulema oryzae, Oxycetonia jucunda, Phaedon cochleariae, Phyllobius pyri, Phyllopertha horticola, Phyllophaga spp., Phyllotreta spp. such as Phyllotreta chrysocephala, Phyllotreta nemorum, Phyllotreta striolata, Phyllotreta atra; Phyllophaga spp., Phyllopertha horticola, Popillia japonica, Premnotrypes spp., Psy Modes chrysocephala, Ptinus spp., Rhizobius ventralis , Rhizopertha dominica, Sitona lineatus, Sitophilus spp. such as Sitophilus granaria, Sitophilus zeamais; Sphenophorus spp. such as Sphenophorus levis; Sternechus spp. such as Sternechus subsignatus; Symphyletes spp., Tenebrio molitor, Tribolium spp. such as Tribolium castaneum; Trogoderma spp., Tychius spp., Xylotrechus spp., and Zabrus spp. such as Zabrus tenebrioides, flies, mosquitoes (Diptera), e.g. Aedes spp. such as Aedes aegypti, Aedes albopictus, Aedes vexans; Anastrepha ludens, Anopheles spp. such as Anopheles albimanus, Anopheles crucians, Anopheles freeborni, Anopheles gambiae, Anopheles leucosphyrus, Anopheles maculipennis, Anopheles minimus, Anopheles quadrimaculatus, Anopheles sinensis; Bibio hortulanus, Bactrocera spp. such as Bactrocera dorsalis, Calliphora erythrocephala, Calliphora vicina, , Ceratitis capitata, Chrysomyia spp. such as Chrysomya bezziana, Chrysomya hominivorax, Chrysomya macellaria; Chrysops atianticus, Chrysops discalis, Chrysops silacea, Cochliomyia spp. such as Cochliomyia hominivorax; Contarinia spp. such as Contarinia sorghicola; Cordylobia anthropophaga, Culex spp. such as Culex nigripalpus, Culex pipiens, Culex quinquefasciatus, Culex tarsalis, Culex tritaeniorhynchus; Culicoides furens, Culiseta inornata, Culiseta melanura, Cuterebra spp., Dacus cucurbitae, Dacus oleae, Dasineura brassicae, Delia spp. such as Delia antique, Delia coarctata, Delia platura, Delia radicum; Dermatobia hominis, Drosophila spp. such as Drosophila suzukii, Fannia spp. such as Fannia canicularis; Gastraphilus spp. such as Gasterophilus intestinalis; Geomyza Tripunctata, Glossina fuscipes, Glossina morsitans, Glossina palpalis, Glossina tachinoides, Haematobia irritans, Haplodiplosis equestris, Hippelates spp., Hylemyia spp. such as Hylemyia platura; Hypodermacabbage spp. such as Hypoderma lineata; Hyppobosca spp., Leptoconops torrens, Liriomyza spp. such as Liriomyza sativae, Liriomyza trifolii; Lucilia spp. such as Lucilia caprina, Lucilia cuprina, Lucilia sericata; Lycoria pectoralis, Mansonia titillanus, Mayetiola spp. such as Mayetiola destructor; Musca spp. such as Musca autumnalis, Musca domestica; Muscina stabulans, Oestrus spp. such as Oestrus ovis; Opomyza florum, Oscinella spp. such as Oscinella frit; Pegomya hysocyami, Phlebotomus argentipes, Phorbia spp. such as Phorbia antiqua, Phorbia brassicae, Phorbia coarctata; Prosimulium mixtum, Psila rosae, Psorophora columbiae, Psorophora discolor, Rhagoletis cerasi, Rhagoletis pomonella, Sarcophaga spp. such as Sarcophaga haemorrhoidalis; Simulium vittatum, Stomoxys spp. such as Stomoxys calcitrans; Tabanus spp. such as Tabanus atratus, Tabanus bovinus, Tabanus lineola, Tabanus similis; Tannia spp., Tipula oleracea, Tipula paludosa, and Wohlfahrtia spp., thrips (Thysanoptera), e.g. Baliothrips biformis, Dichromothrips corbetti, Dichromothrips ssp., Enneothrips flavens, Frankliniella spp. such as Frankliniella fusca, Frankliniella occidentalis, Frankliniella tritici; Heliothrips spp., Hercinothrips fern oral is, Kakothrips spp., Rhipiphorothrips cruentatus, Scirtothrips spp. such as Scirtothrips citri; Taeniothrips cardamoni, Thrips spp. such as Thrips oryzae, Thrips palmi, Thrips tabaci; termites (Isoptera), e.g. Calotermes flavicollis, Coptotermes formosanus, Heterotermes aureus, Heterotermes longiceps, Heterotermes tenuis, Leucotermes flavipes, Odontotermes spp., Reticulitermes spp. such as Reticulitermes speratus, Reticulitermes flavipes, Reticulitermes grassei, Reticulitermes lucifugus, Reticulitermes santonensis, Reticulitermes virginicus; Termes natalensis, cockroaches (Blattaria - Blattodea), e.g. Acheta domesticus, Blatta orientalis, Blattella asahinae, Blattella germanica, Gryllotalpa spp., Leucophaea maderae, Locusta spp., Melanoplus spp., Periplaneta americana, Periplaneta australasiae, Periplaneta brunnea, Periplaneta fuligginosa, Periplaneta japonica, bugs, aphids, leafhoppers, whiteflies, scale insects, cicadas (Hemiptera), e.g. Acrosternum spp. such as Acrosternum hilare; Acyrthosipon spp. such as Acyrthosiphon onobrychis, Acyrthosiphon pisum; Adelges laricis, Aeneolamia spp., Agonoscena spp., Aleurodes spp., Aleurolobus barodensis, Aleurothrixus spp., Amrasca spp., Anasa tristis, Antestiopsis spp., Anuraphis cardui, Aonidiella spp., Aphanostigma piri, Aphidula nasturtii, Aphis spp. such as Aphis fabae, Aphis forbesi, Aphis gossypii, Aphis grossulariae, Aphis pomi, Aphis sambuci, Aphis schneideri, Aphis spiraecola; Arboridia apicalis, Arilus critatus, Aspidiella spp., Aspidiotus spp., Atanus spp., Aulacorthum solani, Bemisia spp. such as Bemisia argentifolii, Bemisia tabaci; Blissus spp. such as Blissus leucopterus; Brachycaudus cardui, Brachycaudus helichrysi, Brachycaudus persicae, Brachycaudus prunicola, Brachycolus spp., Brevicoryne brassicae, Calepitrimerus spp. such as Calepitrimerus vitis, Calligypona marginata, Calocoris spp., Campylomma livida, Capitophorus horni, Carneocephala fulgida, Cavelerius spp., Ceraplastes spp., Ceratovacuna lanigera, Cercopidae, Cerosipha gossypii, Chaetosiphon fragaefolii, Chionaspis tegalensis, Chlorita onukii, Chromaphis juglandicola, Chrysomphalus ficus, Cicadulina mbila, Cimex spp. such as Cimex hemipterus, Cimex lectularius; Coccomytilus halli, Coccus spp., Creontiades dilutus, Cryptomyzus ribis, Cryptomyzus ribis, Cyrtopeltis notatus, Dalbulus spp., Dasynus piperis, Dialeurades spp., Diaphorina spp., Diaspis spp., Dichelops furcatus, Diconocoris hewetti, Doralis spp., Dreyfusia nordmannianae, Dreyfusia piceae, Drosicha spp., Dysaphis spp. such as Dysaphis plantaginea, Dysaphis pyri, Dysaphis radicola; Dysaulacorthum pseudosolani, Dysdercus spp. such as Dysdercus cingulatus, Dysdercus intermedius; Dysmicoccus spp., Empoasca spp. such as Empoasca fabae, Empoasca solana, Empoasca vitis; Eriosoma spp., Erythroneura spp., Eurygaster spp. such as Eurygaster integriceps; Euscelis bilobatus, Euschistus spp. such as Euschistuos heros, Euschistus impictiventris, Euschistus servus; Geococcus coffeae, Halyomorpha spp. such as Halyomorpha halys; Heliopeltis spp., Homalodisca coagulata, Horcias nobilellus, Hyalopterus pruni, Hyperomyzus lactucae, lcerya spp., Idiocerus spp., Idioscopus spp., Laodeiphax striatellus, Lecanium spp., Lepidosaphes spp., Leptocorisa spp., Leptoglossus phyllopus, Lipaphis erysimi, Lygus spp. such as Lygus hesperus, Lygus lineolaris, Lygus pratensis; Macropes excavatus, Macrosiphum spp. such as Macrosiphum rosae, Macrosiphum avenae, Macrosiphum euphorbiae; Mahanarva fimbriolata, Megacopta cribraria, Megoura viciae, Melanaphis pyrarius, Melanaphis sacchari, Metcafiella spp., Metopolophium dirhodum, Miridae spp., Monellia costalis, Monelliopsis pecanis, Myzus spp. such as Myzus ascalonicus, Myzus cerasi, Myzus persicae, Myzus Marians; Nasonovia ribisnigri, Nephotettix spp. such as Nephotettix malayanus, Nephotettix nigropictus, Nephotettix parvus, Nephotettix virescens; Nezara spp. such as Nezara viridula; Nilaparvata lugens, Oebalus spp., Oncometopia spp., Orthezia praelonga, Parabemisia myricae, Paratrioza spp., Parlatoria spp., Pemphigus spp. such as Pemphigus bursarius; Pentomidae, Peregrinus maidis, Perkinsiella saccharicida, Phenacoccus spp., Phloeomyzus passerinii, Phorodon humuli, Phylloxera spp., Piesma quadrata, Piezodorus spp. such as Piezodorus guildinii, Pinnaspis aspidistrae, Planococcus spp. Such as Planococcus citri, Planococcus ficus, Protopulvinaria pyriformis, Psallus seriatus, Pseudacysta persea, Pseudaulacaspis pentagona, Pseudococcus spp. such as Pseudococcus comstocki; Psylla spp. such as Psylla mall, Psylla piri; Pteromalus spp., Pyrilla spp., Quadraspidiotus spp., Quesada gigas, Rastrococcus spp., Reduvius senilis, Rhodnius spp., Rhopalomyzus ascalonicus, Rhopalosiphum spp. such as Rhopalosiphum pseudobrassicas, Rhopalosiphum insertum, Rhopalosiphum maidis, Rhopalosiphum padi; Sagatodes spp., Sahlbergella singularis, Saissetia spp., Sappaphis mala, Sappaphis mail, Scaphoideus titanus, Schizaphis graminum, Schizoneura lanuginosa, Scotinophora spp., Selenaspidus articulatus, Sitobion avenae, Sogata spp., Sogatella furcifera, Solubea insularis , Stephanitis nashi, Stictocephala festina, Tenalaphara malayensis, Thyanta spp. such as Thyanta perditor; Tibraca spp., Tinocallis caryaefoliae, Tomaspis spp., Toxoptera spp. such as Toxoptera aurantii; Trialeurodes spp. such as Trialeurodes vaporariorum; Triatoma spp., Trioza spp., Typhlocyba spp., Unaspis spp. such as Unaspis yanonensis; and Viteus vitifolii, ants, bees, wasps, sawflies (Hymenoptera), e.g. Athalia rosae, Atta capiguara, Atta cephalotes, Atta cephalotes, Atta laevigata, Atta robusta, Atta sexdens, Atta texana, Bombus spp., Camponotus floridanus, Crematogaster spp., Dasymutilla occidentalis, Diprion spp., Dolichovespula maculata, Hoplocampa spp. such as Hoplocampa minuta, Hoplocampa testudinea; Lasius spp. such as Lasius niger, Linepithema humile, Monomorium pharaonis, Paravespula germanica, Paravespula pennsylvanica, Paravespula vulgaris, Pheidole megacephala, Pogonomyrmex barbatus, Pogonomyrmex californicus, Polistes rubiginosa, Solenopsis geminata, Solenopsis invicta, Solenopsis richteri, Solenopsis xyloni, Vespa spp. such as Vespa crabro, and Vespula squamosa, crickets, grasshoppers, locusts (Orthoptera), e.g. Acheta domestica, Calliptamus italicus, Chortoicetes terminifera, Dociostaurus maroccanus, Gryllotalpa africana, Gryllotalpa gryllotalpa, Hieroglyphus daganensis, Kraussaria angulifera, Locusta migratoria, Locustana pardalina, Melanoplus bivittatus, Melanoplus femurrubrum, Melanoplus mexicanus, Melanoplus sanguinipes, Melanoplus spretus, Nomadacris septemfasciata, Oedaleus senegalensis, Schistocerca americana, Schistocerca gregaria, Tachycines asynamorus, and Zonozerus variegatus, arachnids (Arachnida), such as acari, e.g. of the families Argasidae, Ixodidae and Sarcoptidae, such as Amblyomma spp. (e.g. Amblyomma americanum, Amblyomma variegatum, Amblyomma maculatum), Argas spp. (e.g. Argas persicus), Boophilus spp. (e.g. Boophilus annulatus, Boophilus decoloratus, Boophilus microplus), Dermacentor silvarum, Dermacentor andersoni, Dermacentor variabilis, Hyalomma spp. (e.g. Hyalomma truncatum), Ixodes spp. (e.g. Ixodes ricinus, Ixodes rubicundus, Ixodes scapularis, Ixodes holocyclus, Ixodes pacificus), Ornithodorus spp. (e.g. Ornithodorus moubata, Ornithodorus hermsi, Ornithodorus turicata), Ornithonyssus bacoti, Otobius megnini, Dermanyssus gallinae, Psoroptes spp. (e.g. Psoroptes ovis), Rhipicephalus spp. (e.g. Rhipicephalus sanguineus, Rhipicephalus appendiculatus, Rhipicephalus evertsi), Rhizoglyphus spp., Sarcoptes spp. (e.g. Sarcoptes scabiei), and Eriophyidae spp. such as Acaria sheldoni, Aculops spp. (e.g. Aculops pelekassi) Aculus spp. (e.g. Aculus schlechtendali), Epitrimerus pyri, Phyllocoptruta oleivora and Eriophyes spp. (e.g. Eriophyes sheldoni); Tarsonemidae spp. such as Hemitarsonemus spp., Phytonemus pallidus and Polyphagotarsonemus latus, Stenotarsonemus spp.; Tenuipalpidae spp. such as Brevipalpus spp. (e.g. Brevipalpus phoenicis); (Trombidiformes), e.g. Tetranychidae spp. such as Eotetranychus spp., Eutetranychus spp., Oligonychus spp., Tetranychus cinnabarinus (carmine spider mite), Tetranychus kanzawai (Kanzawa spider mite), Tetranychus pacificus (pacific spider mite), Tetranychus telarius (two-spotted spider mite) and Tetranychus urticae (red spider mite); Bryobia praetiosa, Panonychus spp. (e.g. Panonychus ulmi, Panonychus citri), Metatetranychus spp. and Oligonychus spp. (e.g. Oligonychus pratensis), Vasates lycopersici; Araneida, e.g. Latrodectus mactans, and Loxosceles reclusa. And Acarus siro, Chorioptes spp., Scorpio maurus fleas (Siphonaptera), e.g. Ceratophyllus spp., Ctenocephalides felis, Ctenocephalides canis, Xenopsylla cheopis, Pulex irritans, Tunga penetrans, and Nosopsyllus fasciatus, silverfish, firebrat (Thysanura), e.g. Lepisma saccharina and Thermobia domestica, centipedes (Chilopoda), e.g. Geophilus spp., Scutigera spp. such as Scutigera coleoptrata; millipedes {Diplopoda), e.g. Blaniulus guttulatus, Narceus spp., Earwigs (Dermaptera), e.g. forficula auricularia, lice (Phthiraptera), e.g. Damalinia spp., Pediculus spp. such as Pediculus humanus capitis, Pediculus humanus corporis; Pthirus pubis, Haematopinus spp. such as Haematopinus eurysternus, Haematopinus suis; Linognathus spp. such as Linognathus vituli; Bovicola bovis, Menopon gallinae, Menacanthus stramineus and Solenopotes capillatus, Trichodectes spp., springtails (Collembola), e.g. Onychiurus ssp. such as Onychiurus armatus, They are also suitable for controlling nematodes: plant parasitic nematodes such as root knot nematodes, Meloidogyne hapla, Meloidogyne incognita, Meloidogyne javanica, and other Meloidogyne species; cyst-forming nematodes, Globodera rostochiensis and other Globodera species; Heterodera avenae, Heterodera glycines, Heterodera schachtii, Heterodera trifolii, and other Heterodera species; Seed gall nematodes, Anguina species; Stem and foliar nematodes, Aphelenchoides species such as Aphelenchoides besseyi ; Sting nematodes, Belonolaimus longicaudatus and other Belonolaimus species; Pine nematodes, Bursaphelenchus lignicolus Mamiya et Kiyohara, Bursaphelenchus xylophilus and other Bursaphelenchus species; Ring nematodes, Criconema species, Criconemella species, Criconemoides species, Mesocriconema species; Stem and bulb nematodes, Ditylenchus destructor, Ditylenchus dipsaci and other Ditylenchus species; Awl nematodes, Dolichodorus species; Spiral nematodes, Heliocotylenchus multicinctus and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, Longidorus elongatus and other Longidorus species; Lesion nematodes, Pratylenchus brachyurus, Pratylenchus neglectus, Pratylenchus penetrans, Pratylenchus curvitatus, Pratylenchus goodeyi and other Pratylenchus species; Burrowing nematodes, Radopholus similis and other Radopholus species; Reniform nematodes, Rotylenchus robustus, Rotylenchus reniformis and other Rotylenchus species; Scutellonema species; Stubby root nematodes, Trichodorus primitivus and other Trichodorus species, Paratrichodorus species; Stunt nematodes, Tylenchorhynchus claytoni, Tylenchorhynchus dubius and other Tylenchorhynchus species; Citrus nematodes, Tylenchulus species such as Tylenchulus semipenetrans; Dagger nematodes, Xiphinema species; and other plant parasitic nematode species; (Dictyoptera), e.g. cockroaches (Blattodea) and praying mantises (Mantodea); (Heteroptera) true bugs, e.g. species of family Aenictopecheidae, Enicocephalidae (unique-headed bug), Ceratocombidae, Dipsocoridae, Hypsipterygidae, Schizopteridae; (Homoptera), e.g. species of sucking insects

Examples of further pest species which may be controlled by said composition include: from the class of the Bivaiva, for example, Dreissena spp.; from the class of the Gastropoda, for example, Arion spp., Biomphalaria spp., Bulinus spp., Deroceras spp., Galba spp., Lymnaea spp., Oncomelania spp., Succinea spp.; from the class of the helminths, for example, Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp., Dictyocaulus filaria, Diphyllobothrium latum, Dracunculus medinensis, Echinococcus granulosus, Echinococcus multilocularis, Enterobius vermicularis, Faciola spp., Haemonchus spp. such as Haemonchus contortus; Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp., Strongyloides fuelleborni, Strongyloides stercora lis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti; from the order of the Isopoda, for example, Armadillidium vulgare, Oniscus asellus, Porcellio scaber; from the order of the Symphyla, for example, Scutigerella immaculata.

Further examples of pest species which may be controlled by said composition include: Anisoplia austriaca, Apamea spp., Austroasca viridigrisea, Baliothrips biformis, Caenorhabditis elegans, Cephus spp., Ceutorhynchus napi, Chaetocnema aridula, Chilo auricilius, Chilo indicus, Chilo polychrysus, Chortiocetes termini fera, Cnaphalocroci medinalis, Cnaphalocrosis spp., Colias eurytheme, Col lops spp., Cornitermes cumulans, Creontiades spp., Cyclocephala spp., Dalbulus maidis, Deraceras reticulatum , Diatrea saccharalis, Dichelops furcatus, Dicladispa armigera, Diloboderus spp. such as Diloboderus abderus; Edessa spp., Epinotia spp., Formicidae, Geocoris spp., Globitermes sulfureus, Gryllotalpidae, Halotydeus destructor, Hipnodes bicolor, Hydrellia philippina, Julus spp., Laodelphax spp., Leptocorsia acuta , Leptocorsia oratorius , Liogenys fuscus, Lucillia spp., Lyogenys fuscus, Mahanarva spp., Maladera matrida, Marasmia spp., Mastotermes spp., Mealybugs, Megascelis ssp, Metamasius hemipterus, Microtheca spp., Mods latipes, Murgantia spp., Mythemina separata , Neocapritermes opacus, Neocapritermes parvus, Neomegalotomus spp., Neotermes spp., Nymphula depunctalis, Oebalus pugnax, Orseolia spp. such as Orseolia oryzae; Oxycaraenus hyalinipennis, Plusia spp., Pomacea canaliculata, Procornitermes ssp, Procornitermes triacifer , Psylloides spp., Rachiplusia spp., Rhodopholus spp., Scaptocoris castanea, Scaptocoris spp., Scirpophaga spp. such as Scirpophaga incertulas , Scirpophaga innotata; Scotinophara spp. such as Scotinophara coarctata; Sesamia spp. such as Sesamia inferens, Sogaella frucifera, Solenapsis geminata, Spissistilus spp., Stalk borer, Stenchaetothrips biformis, Steneotarsonemus spinki, Sylepta derogata, Telehin licus, Trichostrongylus spp.

### Preferred examples of crop pests include:

Hemiptera harmful insects:
   Planthoppers (Delphacidae) such as small brown planthopper (Laodelphax striatellus), brown rice planthopper (Nilaparvata lugens), white-backed rice planthopper (Sogatella furcifera) and the like; leafhoppers (Deltocephalidae) such as green rice leafhopper (Nephotettix cincticeps), green rice leafhopper (Nephotettix virescens) and the like; aphids (Aphididae) such as cotton aphid (Aphis gossypii), green peach aphid (Myzus persicae), cabbage aphid (Brevicoryne brassicae), potato aphid (Macrosiphum euphorbiae), foxglove aphid (Aulacorthum solani), oat bird-cherry aphid (Rhopalosiphum padi), tropical citrus aphid (Toxoptera citricidus) and the like; stink bugs (Pentatomidae) such as green stink bug (Nezara antennata or Nezara viridula), bean bug (Riptortus clavetus), rice bug (Leptocorisa chinensis), white spotted spined bug (Eysarcoris parvus), stink bug (Halyomorpha mista), brown marmorated stink bug (Halyomorpha halys), tarnished plant bug (Lyus lineolarxs) and the like; whiteflies (Aleyrodidae) such as greenhouse whitefly (Trialeurodes vaporariorum), sweetpotato whitefly (Bemisia tabaci), silverleaf whitefly (Bemisia argentifolii) and the like; scales (Coccidae) such as Calfornia red scale (Aonidiella aurantii), San Jose scale (Comstockaspis perniciosa), citrus north scale (Unaspis citri), red wax scale (Ceroplastes rubens), cottonycushion scale (Icerya purchasi), citrus mealybug (Planococcus citri), grape mealybug (Planococcus ficus) and the like; lace bugs (Tingidae); psyllids (Psyllidae); etc.
Lepidoptera harmful insects:
   Pyralid moths (Pyralidae) such as rice stem borer (Chilo suppressalis), yellow rice borer (Tryporyza incertulas), rice leafroller (Cnaphalocrocis medinalis), cotton leafroller (Notarcha derogata), Indian meal moth (Plodia interpunctella), oriental corn borer (Ostrinia furnacalis), European corn borer (Ostrinia nubilalis), cabbage webworm (Hellula undalis), bluegrass webworm (Pediasia teterrellus) and the like; owlet moths (Noctuidae) such as common cutworm (Spodoptera litura), beet armyworm (Spodoptera exigua), fall armyworm (Spodoptera frugiperda), oriental armyworm (Pseudaletia separata), cabbage armyworm (Mamestra brassicae), black cutworm (Agrotis ipsilon), beet semi-looper (Plusia nigrisigna), Thoricoplusia spp., Heliothis spp., Helicoverpa spp. and the like; white butterflies (Pieridae) such as common cabbage worm (Pieris rapae) and the like; tortricid moths (Tortricidae) such as Adoxophyes spp., oriental fruit moth (Grapholita molesta), soybean pod borer (Leguminivora glycinivorella), azuki bean podworm (Matsumuraeses azukivora), summer fruit tortrix (Adoxophyes orana fasciata), smaller tea tortrix (Adoxophyes spp.), oriental tea tortrix (Homona magnanima), apple tortrix (Archips fuscocupreanus), codling moth (Cydia pomonella) and the like; leafblotch miners (Gracillariidae) such as tea leafroller (Caloptilia theivora), apple leafminer (Phyllonorycter ringoneella) and the like; Carposinidae such as peach fruit moth (Carposina niponensis) and the like; lyonetiid moths (Lyonetiidae) such as Lyonetia spp. and the like; tussock moths (Lymantriidae) such as Lymantria spp., Euproctis spp. and the like; yponomeutid moths (Yponomeutidae) such as diamondback (Plutella xylostella) and the like; gelechiid moths (Gelechiidae) such as pink bollworm (Pectinophora gossypiella), potato tubeworm (Phthorimaea operculella) and the like; tiger moths and allies (Arctiidae) such as fall webworm (Hyphantria cunea) and the like; tineid moths (Tineidae) such as casemaking clothes moth (Tinea translucens) , webbing clothes moth (Tineola bisselliella) and the like; etc.
Thysanoptera harmful insects:
   Thrips (Thripidae) such as western flower thrips (Frankliniella occidentalis), melon thrips (Thrips palmi), yellow tea thrips (Scirtothrips dorsalis), onion thrips (Thrips tabaci), flower thrips (Frankliniella intonsa), tobacco thrips (Frankliniella fusca) and the like, etc.;
Diptera harmful insects:
   House flies (Musca domestica), common house mosquito (Culex popiens pallens), horsefly (Tabanus trigonus), onion fly (Hylemya antiqua), seedcorn maggot (Hylemya platura), asian tiger mosquito (Anopheles sinensis); leafminer flies (Agromyzidae) such as rice leafminer (Agromyza oryzae), little rice leafminer (Hydrellia griseola), rice stemmaggot (Chlorops oryzae), legume leafminer (Liriomyza trifolii) and the like; melon fly (Dacus cucurbitae), Meditteranean fruit fly (Ceratitis capitata), olive fruit fly (Bactrocera oleae), oriental fruit fly (Bactrocera dorsalis) etc.;
Coleoptera harmful insects:
   Twenty-eight-spotted ladybird (Epilachna vigintioctopunctata), cucurbit leaf beetle (Aulacophora femoralis), striped flea beetle (Phyllotreta striolata) , rice leaf beetle (Oulema oryzae), rice curculio (Echinocnemus squameus), rice water weevil (Lissorhoptrus oryzophilus), boll weevil (Anthonomus grandis), azuki bean weevil (Callosobruchus chinensis), hunting billbug (Sphenophorus venatus), Japanese beetle (Popillia japonica), cupreous chafer (Anomala cuprea), Corn root worms (Diabrotica spp.), Colorado potato beetle (Leptinotarsa decemlineata), click beetles (Agriotes spp.), cigarette beetle (Lasioderma serricorne), varied carper beetle (Anthrenus verbasci), red flour beetle (Tribolium castaneum), powder-post beetle (Lyctus brunneus), white-spotted longicorn beetle (Anoplophora malasiaca), pine shoot beetle (Tomicus piniperda), pollen beetle (Brassicogethes aeneus) etc.;
Orthoptera harmful insects:
   Asiatic locust (Locusta migratoria), African mole cricket (Gryllotalpa africana), rice grasshopper (Oxya yezoensis), rice grasshopper (Oxya japonica), etc.;
Hymenoptera harmful insects:
   Cabbage sawfly (Athalia rosae), leaf-cutting ant (Acromyrmex spp.), fire ant (Solenopsis spp.), etc.;
   In an embodiment, the crop pests belong to Order selected from the group consisting of Hemiptera, Heteroptera, Homoptera, Coleoptera, Diptera, Lepidoptera, Dictyoptera, Hymenoptera, Acari, Thysanoptera, Trombidiformes and combinations thereof.

In an embodiment, the non-crop pests belong to Order selected from the group consisting of Dictyoptera, Hymenoptera, and combinations thereof.

The plant or crop or a part thereof on which the entomopathogenic fungus of the present invention can be used is an agronomically useful plant or a crop, for example, vegetable, fruit and cereal crops, trees, nuts, vines, flowering plants and ornamental plants. In an embodiment, the plant or a part thereof is selected from the group consisting of Apiaceae, Asteraceae, Brassicaceae, Chenopodiaceae, Convolvulaceae, Cucurbitaceae, Fabaceae, Gramineae, Liliaceae, Polygonaceae, Rosaceae, Solanaceae, Poaceae, the Vitaceae. Thus, in an embodiment, the target plant is selected from crops, cereals, fruits, vegetables, nuts, vines, nursery plants and flowers. In an embodiment, non-limiting examples of target plant include corn, cereals such as rice, wheat, barley, rye, oat, sorghum, millet, triticale, buckwheat, etc.; cotton, soybean, beet, row crops, legumes, grams, sugar cane, tobacco, etc.; oilseeds such as oilseed rape, peanut/groundnut, rapeseed, sunflower, etc.; vegetables: solanaceous vegetables such as eggplant, tomato, pimento, pepper, potato, etc., cucurbit vegetables such as cucumber, pumpkin, zucchini, water melon, melon, squash, gourds, muskmelon, etc., cruciferous vegetables such as radish, white turnip, horseradish, kohlrabi, cabbage, leaf mustard, broccoli, cauliflower, brussels sprouts, kale, etc., asteraceous vegetables such as burdock, crown daisy, artichoke, lettuce, etc, liliaceous vegetables such as green onion, onion, shallot, garlic, and asparagus, ammiaceous vegetables such as carrot, parsley, celery, parsnip, leek, etc., chenopodiaceous vegetables such as spinach, swiss chard, etc., lamiaceous vegetables such as *Perilla frutescens*, mint, basil, etc.; herbs and spices such as coriander, chamomile, cassia, catnip, clove, cumin, curry, cilantro, cinnamon, cardamom, dill, anise, juniper, lavender, parsley, rosemary, marigold, mustard, nutmeg, fennel, poppy, thyme, vanilla, saffron, poppy, sage, wintergreen, etc.; flowers, foliage plants, turf grasses, fruits: pome fruits such apple, pear, quince, guava, etc, stone fleshy fruits such as peach, plum, nectarine, cherry, apricot, prune, etc., citrus fruits such as orange, lemon, lime, grapefruit, mandarin, malta, kumquat, pummelo, tangerine, tangor, uniq, etc., nuts such as chestnuts, walnuts, hazelnuts, almond, pistachio, cashew nuts, macadamia nuts, pecan nut, cashew nut, hazel nut, pine nut, etc. berries such as caneberry, strawberry, blueberry, cranberry, blackberry, raspberry, coryberry, darrowberry, dewberry, thornless berry, evergreen blackberry, himalayaberry, hullberry, lavacaberry, loganberry, lowberry, lucretiaberry, mammoth blackberry, marionberry, mora, mures deronce, nectarberry, olallieberry, evergreen berry, phenomenalberry, rangeberry, ravenberry, rossberry, dewberry, tayberry, youngberry, zarzamora, aronia berry, currant, elderberry, barberry, gooseberry, honeysuckle, huckleberry, jostaberry, juneberry, lingonberry, salal, seabuckthorn, bayberry, buffaloberry, chokecherry, maypop, mulberry, bearberry, bilberry, cloudberry, muntries, partridgeberry, etc., grape, kaki fruit, kiwi fruit, olive, plum, banana, coffee, date palm, coconuts, papaya, persimmon, avocado, dragon fruit, pomegranate, lychee, jackfruit, pineapple, passionfruit, sapota, etc., trees other than fruit trees; tea, mulberry, flowering plant, trees such as ash, birch, dogwood, eucalyptus, *Ginkgo biloba,* lilac, maple, *Quercus,* poplar, Judas tree, *Liquidambar formosana*, plane tree, zelkova, japanese arborvitae, fir wood, hemlock, juniper, *Pinus, Picea,* and *Taxus cuspidate,* etc., other crops such as chive, day lily, *Elegans hosta, Fritillaria,* gojiberry, okra, pea, hops, beans, guar, radish, amaranth, jute, fenugreek, lentils, chickpea, artichoke, rhubarb, licorice, sweet potato, *Dioscorea japonica,* colocasia, ornamental grasses (lawn turf, sod, etc.), varieties and cultivars thereof.

An embodiment of the present invention provides a method of controlling pests selected from the group consisting of aphids, stink bugs, leafhoppers, whiteflies, mites, thrips, beetles, fruit flies, ants, scale insects, moths, mealybugs, cotton leafworms, cotton bollworms, and combinations thereof, wherein said method comprises contacting said pests with an entomopathogenic fungus selected from a *Beauveria bassiana* deposited as CNCM I-2960 or its spores, or a *Beauveria bassiana* deposited as CNCM I-2961 or its spores, or a combination thereof.

In an embodiment, the preferred entomopathogenic fungus is *Beauveria bassiana* deposited as CNCM I-2960 or spores thereof.

In another embodiment, the preferred entomopathogenic fungus is *Beauveria bassiana* deposited as CNCM I-2961 or spores thereof.

In an embodiment, the concentration of entomopathogenic fungus applied is from about 1 x 10³ CFU/ml to about 1 x 10¹⁰ CFU/ml. Preferably, the concentration of entomopathogenic fungus applied is from about 1 x 10⁵ CFU/ml to about 1 x 10⁹ CFU/ml.

In an embodiment, the entomopathogenic fungus is applied at a rate of about 0.1L/ha to about 10L/ha. In an embodiment, the entomopathogenic fungus is applied at a rate of about 0.2 L/ha to about 8 L/ha. In an embodiment, the entomopathogenic fungus is applied at a rate of about 0.3 L/ha to about 6 L/ha. In an embodiment, the entomopathogenic fungus is applied at a rate of about 0.4 L/ha to about 4 L/ha. In a preferred embodiment, the entomopathogenic fungus is applied at a rate of about 0.5 L/ha to about 2 L/ha.

A skilled person will understand that the time of application of entomopathogenic fungus will depend upon the incidence or possibility of incidence of attack or damage by crop pests or non-crop pests and would be different for different purposes. In an embodiment, the entomopathogenic fungus is applied at pre-sowing, sowing, pre-emergence, emergence, post-emergence, pre-harvest, harvest, or post-harvest stage.

In an embodiment, the entomopathogenic fungus may be tank mixed with agriculturally acceptable excipient and applied at a locus where control of insect pest is desired, or may be alternatively mixed with water, and then applied.

In an embodiment, the entomopathogenic fungus may be applied to a crop, a plant, a plant part, a surface, a locus or to the insect. In an embodiment, the method as embodied herein the specification comprises contacting a crop, a plant or a part thereof, a locus or said pests with an entomopathogenic fungus selected from a *Beauveria bassiana* deposited as CNCM I-2960 or its spores, or a *Beauveria bassiana* deposited as CNCM I-2961 or its spores, or a combination thereof.

In an embodiment, there is provided a method of controlling or preventing crop pests and non-crop pests, and damage caused by said crop pests and non-crop pests, said method comprising contacting a crop, a plant or a part thereof, a locus or said pests with an entomopathogenic fungus selected from a *Beauveria bassiana* deposited as CNCM I-2960 or its spores, or a *Beauveria bassiana* deposited as CNCM I-2961 or its spores, or a combination thereof, wherein the concentration of entomopathogenic fungus contacted is from about 1 x 10³ CFU/ml to about 1 x 10¹⁰ CFU/ml.

An embodiment of the present invention provides a use of an entomopathogenic fungus selected from a *Beauveria bassiana* deposited as CNCM I-2960 or its spores, or a *Beauveria bassiana* deposited as CNCM I-2961 or its spores, or a combination thereof for controlling or preventing crop pests and non-crop pests, and damage caused by said crop pests and non-crop pests.

In an embodiment, the entomopathogenic fungus may be contained in a composition comprising one or more agriculturally acceptable excipients.

In an embodiment, there is provided a method of controlling or preventing crop pests and non-crop pests, and damage caused by said crop pests and non-crop pests, said method comprising contacting a crop, a locus or said pests with a composition comprising an entomopathogenic fungus selected from a *Beauveria bassiana* deposited as CNCM I-2960 or its spores, or a *Beauveria bassiana* deposited as CNCM I-2961 or its spores, or a combination thereof, and an agriculturally acceptable excipient.

An embodiment of the present invention provides a composition comprising an entomopathogenic fungus selected from a *Beauveria bassiana* deposited as CNCM I-2960 or a *Beauveria bassiana* deposited as CNCM I-2961, or a combination thereof and an agriculturally acceptable excipient for controlling or preventing crop pests and non-crop pests, and damage caused by said crop pests and non-crop pests.

An embodiment of the present invention provides a composition comprising an entomopathogenic fungus selected from a *Beauveria bassiana* deposited as CNCM I-2960 or its spores or a *Beauveria bassiana* deposited as CNCM I-2961 or its spores, or a combination thereof and an agriculturally acceptable excipient for controlling or preventing crop pests and non-crop pests, and damage caused by said crop pests and non-crop pests.

An embodiment of the present invention provides a use of a composition comprising an entomopathogenic fungus selected from a *Beauveria bassiana* deposited as CNCM I-2960 or its spores, or a *Beauveria bassiana* deposited as CNCM I-2961 or its spores, or a combination thereof, and an agriculturally acceptable excipient for controlling or preventing crop pests and non-crop pests, and damage caused by said crop pests and non-crop pests.

In an embodiment, the amount of entomopathogenic fungus in said composition ranges from about 0.1 % w/w to 99 % w/w of the total weight of the composition.

In an embodiment, the amount of agriculturally acceptable excipient in said composition ranges from about 0.1 % w/w to 99 % w/w of the total weight of the composition.

The agriculturally acceptable excipient may be any one or a combination of adjuvants, co-solvents, surfactants, colorants, dispersants, emulsifiers, thickeners, antifreeze agents, antifoam agents, stabilizers, wetting agents or a mixture thereof which may be optionally added to the compositions of the present invention.

The surfactants may be selected from non-ionic, anionic or cationic surfactants.

Examples of nonionic surfactants include polyarylphenol polyethoxy ethers, polyalkylphenol polyethoxy ethers, polyglycol ether derivatives of saturated fatty acids, polyglycol ether derivatives of unsaturated fatty acids, polyglycol ether derivatives of aliphatic alcohols, polyglycol ether derivatives of cycloaliphatic alcohols, fatty acid esters of polyoxyethylene sorbitan, alkoxylated vegetable oils, alkoxylated acetylenic diols, polyalkoxylated alkylphenols, fatty acid alkoxylates, sorbitan alkoxylates, sorbitol esters, C₈-C₂₂ alkyl or alkenyl polyglycosides, polyalkoxy styrylaryl ethers, alkylamine oxides, block copolymer ethers, polyalkoxylated fatty glyceride, polyalkylene glycol ethers, linear aliphatic or aromatic polyesters, organo silicones, polyaryl phenols, sorbitol ester alkoxylates, polyalkylene oxide block copolymers, acrylic copolymers and mono- and diesters of ethylene glycol and mixtures thereof.

Examples of anionic surfactants include alcohol sulfates, alcohol ether sulfates, alkylaryl ether sulfates, alkylaryl sulfonates such as alkylbenzene sulfonates and alkylnaphthalene sulfonates and salts thereof, alkyl sulfonates, mono- or di-phosphate esters of polyalkoxylated alkyl alcohols or alkylphenols , mono- or di-sulfosuccinate esters of C₁₂-C₁₅ alkanols or polyalkoxylated C₁₂-C₁₅ alkanols, alcohol ether carboxylates, phenolic ether carboxylates, polybasic acid esters of ethoxylated polyoxyalkylene glycols consisting of oxybutylene or the residue of tetrahydrofuran, sulfoalkylamides and salts thereof such as N-methyl-N-oleoyltaurate Na salt, polyoxyalkylene alkylphenol carboxylates, polyoxyalkylene alcohol carboxylates alkyl polyglycoside/alkenyl succinic anhydride condensation products, alkyl ester sulfates, napthalene sulfonates, naphthalene formaldehyde condensates, alkyl sulfonamides, sulfonated aliphatic polyesters, sulfate esters of styrylphenyl alkoxylates, and sulfonate esters of styrylphenyl alkoxylates and their corresponding sodium, potassium, calcium, magnesium, zinc, ammonium, alkylammonium, diethanolammonium, or triethanolammonium salts, salts of ligninsulfonic acid such as the sodium, potassium, magnesium, calcium or ammonium salt, polyarylphenol polyalkoxyether sulfates and polyarylphenol polyalkoxyether phosphates, and sulfated alkyl phenol ethoxylates and phosphated alkyl phenol ethoxylates.

Cationic surfactants include alkanol amides of C₈-C₁₈ fatty acids and C₈-C₁₈ fatty amine polyalkoxylates, C₁₀-C₁₈ alkyldimethylbenzylammonium chlorides, coconut alkyldimethylaminoacetic acids, and phosphate esters of C₈-C₁₈ fatty amine polyalkoxylates.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

Another embodiment involves addition of a thickener or binder which may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethylether, diethylene glycol monoethylether, triethylene glycol monomethylether, butoxyethanol, butylene glycol monobutylether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, antifoam agent may be selected from Polydimethoxysiloxane, polydimethylsiloxane, Alkyl poly acrylates, Castor Oil, Fatty Acids, Fatty Acids Esters, Fatty Acids Sulfate, Fatty Alcohol, Fatty Alcohol Esters, Fatty Alcohol Sulfate, Foot Olive Oil, Mono & Di Glyceride, Paraffin Oil, Paraffin Wax, Poly Propylene Glycol, Silicones Oil, Vegetable Fats, Vegetable Fats Sulfate, Vegetable Oil, Vegetable Oil Sulfate, Vegetable Wax, Vegetable Wax Sulfate, agents based on silicon or magnesium stearate.

In an embodiment, the composition comprising the entomopathogenic fungus is an oil dispersion. In an embodiment, the composition embodied in PCT/IB2024/053011 is incorporated herein in its entirety.

The present invention will be further illustrated in the following examples. However, it is to be understood that these examples are for illustrative purposes only and should not be used to limit the scope of the present invention in any manner.

### EXAMPLE

### Example 1 - Efficacy of Beauveria bassiana CNCM I-2961 on Dysaphis plantaginea

Composition used for insect control: Suspension of *Beauveria bassiana* CNCM I-2961 spores prepared in Tween 80. Total CFU count = 1.2 x 10⁸ CFU/ml
Trial method: Lab trial in Petri dishes, 10 replicates, 5 adults/replicate
Leaf disc dipped in prepared suspension of treatment, let dried and set up on agar agar
Incubation in climatic room at +21°C, dead adults removed and incubated for sporulation on cadaver: assessment at 17 DAA
Assessment of mortality percentage of *Dysaphis plantaginea* adults at 8 DAA, 10 DAA
DAA = Days after application
Comparative control: Flonicamid

**Table 1: Efficacy of Beauveria bassiana CNCM I-2961 on Dysaphis plantaginea adults**

| Treatment | Dosage | Mortality percentage of *Dysaphis plantaginea* adults *at* 8 DAA | Mortality percentage of *Dysaphis plantaginea* adults *at* 10 DAA |
|---|---|---|---|
| Untreated | - | 0 | 0 |
| *Beauveria bassiana* CNCM I-2961 spore suspension | 1.2 x 10⁸ CFU/ml | 98 | 98 |
| Flonicamid | 0.14 kg/ha | 100 | 100 |

From the above table it is observed that the efficacy of *Beauveria bassiana* CNCM I-2961 spore in controlling *Dysaphis plantaginea* adults is at par with the chemical insecticide.

### Example 2 - Efficacy of Beauveria bassiana CNCM I-2960 on Halyomorpha halys Nymphs

Composition used for insect control: Suspension of *Beauveria bassiana* CNCM I-2960 spores prepared in Tween 80. Total CFU count = 1 x 10⁸ CFU/ml
Trial method: Lab trial in Petri dishes, 10 replicates, 5 nymphs/replicate
Suspension applied on nymphs + spray on beans
Incubation in climatic room at +25°C
Assessment of mortality percentage of *Halyomorpha halys* Nymphs at 10 DAA
Comparative control: Acetamiprid

**Table 2: Efficacy of Beauveria bassiana CNCM I-2960 on Halyomorpha halys Nymphs**

| Treatment | Dosage | Mortality percentage of *Halyomorpha halys* Nymphs *at* 10 DAA |
|---|---|---|
| Untreated | - | 0 |
| *Beauveria bassiana* CNCM I-2960 spore suspension | 1 x 10⁸ CFU/ml | 98 |
| Acetamiprid | 0.5 ml/L | 100 |

From the above table it is observed that the efficacy of *Beauveria bassiana* CNCM I-2960 spore in controlling *Halyomorpha halys* Nymphs is at par with the chemical insecticide.

### Example 3 - Efficacy of Beauveria bassiana CNCM I-2961 and Beauveria bassiana CNCM I-2960 on Halyomorpha halys eggs

Composition used for insect control: Suspension of *Beauveria bassiana* CNCM I-2960 spores prepared in Tween 80. Total CFU count = 1 x 10⁶ CFU/ml, 1 x 10⁷ CFU/ml and 1 x 10⁸ CFU/ml
Suspension of *Beauveria bassiana* CNCM I-2961 spores prepared in Tween 80. Total CFU count = 1 x 10⁶ CFU/ml, 1 x 10⁷ CFU/ml and 1 x 10⁸ CFU/ml
Trial method: Lab trial in Petri dishes, 5 replicates, 10 nymphs/replicate
Suspension sprayed on eggs with equivalent volume of 1000 L/ha
Incubation in climatic room at +25°C
Assessment of mortality percentage of *Halyomorpha halys* Nymphs from treated eggs at 6 DAH, 9DAH, 13 DAH and 17 DAH.
DAH = Days after hatching
Comparative control: Acetamiprid

**Table 3: Efficacy of Beauveria bassiana CNCM-2961 and Beauveria bassiana CNCM I-2960 on Halyomorpha halys nymphs from treated eggs**

| Treatment | Dosage | Mortality percentage of *Halyomorpha halys* nymphs from treated eggs at 6 DAH | Mortality percentage of *Halyomorpha halys* nymphs from treated eggs at 9 DAH | Mortality percentage of *Halyomorpha halys* nymphs from treated eggs at 13 DAH | Mortality percentage of *Halyomorpha halys* nymphs from treated eggs at 17 DAH |
|---|---|---|---|---|---|
| Untreated | - | 0 | 0 | 0 | 0 |
| *Beauveria bassiana* CNCM I-2961 spore suspension | 1 x 10⁶ CFU/ml | 7 | 25 | 37 | 49 |
| *Beauveria bassiana* CNCM I-2961 spore suspension | 1 x 10⁷ CFU/ml | 68 | 94 | 97 | 97 |
| *Beauveria bassiana* CNCM I-2961 spore suspension | 1 x 10⁸ CFU/ml | 81 | 100 | 100 | 100 |
| *Beauveria bassiana* CNCM I-2960 spore suspension | 1 x 10⁶ CFU/ml | 3 | 24 | 32 | 42 |
| *Beauveria bassiana* CNCM I-2960 spore suspension | 1 x 10⁷ CFU/ml | 32 | 88 | 95 | 96 |
| *Beauveria bassiana* CNCM I-2960 spore suspension | 1 x 10⁸ CFU/ml | 14 | 96 | 98 | 99 |
| Acetamiprid | 0.5 ml/L | 0 | 7 | 12 | 22 |

From the above table it is observed that *Beauveria bassiana* CNCM I-2961 spore and *Beauveria bassiana* CNCM I-2960 spore exert better control on *Halyomorpha halys* eggs than the chemical insecticide.

### Example 4 - Efficacy of Beauveria bassiana CNCM I-2961 and Beauveria bassiana CNCM I-2960 on Empoasca vitis adults

Composition used for insect control: Suspension of *Beauveria bassiana* CNCM I-2960 spores prepared in Tween 80. Total CFU count = 8.2 x 10⁷ CFU/ml
Suspension of *Beauveria bassiana* CNCM I-2961 spores prepared in Tween 80. Total CFU count = 1.1 x 10⁸ CFU/ml
Trial method: Lab trial in Petri dishes, 5 replicates, 10 nymphs/replicate
Leaf dipped in prepared suspension of treatment, let dried and set up on agar agar
Incubation in climatic room at +20 C, dead adults removed and incubated for sporulation on cadaver: assessment at 15 DAA
Assessment of mortality percentage of *Empoasca vitis* adults at 7 DAA, 11DAA.
Comparative control: Lambda cyhalothrin

**Table 4: Efficacy of Beauveria bassiana CNCM I-2961 and Beauveria bassiana CNCM I-2960 on Empoasca vitis adults**

| Treatment | Dosage | Mortality percentage of *Empoasca vitis* adults at 7 DAA | Mortality percentage of *Empoasca vitis* adults at 11 DAA |
|---|---|---|---|
| Untreated | - | 0 | 0 |
| *Beauveria bassiana* CNCM I-2961 spore suspension | 1.1 x 10⁸ CFU/ml | 88 | 100 |
| *Beauveria bassiana* CNCM I-2960 spore suspension | 8.2 x 10⁷ CFU/ml | 83 | 100 |
| Lambda cyhalothrin | 75 ml/L | 83 | 100 |

From the above table it is observed that efficacy of *Beauveria bassiana* CNCM I-2961 spore and *Beauveria bassiana* CNCM I-2960 spore in controlling *Empoasca vitis adults* is at par with the chemical insecticide.

### Example 5 - Efficacy of Beauveria bassiana CNCM I-2961 on Empoasca vitis L2/L3 larvae

Composition used for insect control: Suspension of *Beauveria bassiana* CNCM I-2961 spores prepared in Tween 80. Total CFU count = 1.0 x 10⁸ CFU/ml
Trial method: Lab trial in Petri dishes, 10 replicates, 5 L2&L3 larvae /replicate
Leaf dipped in prepared suspension of treatment, let dried and set up on agar agar
Incubation in climatic room at +20°C, dead adults removed and incubated for sporulation on cadaver: assessment at 18 DAA
Assessment of mortality percentage of *Empoasca vitis* L2/L3 larvae at 7 DAA, 10DAA.
Comparative control: Lambda cyhalothrin

**Table 5: Efficacy of Beauveria bassiana CNCM I-2961 on Empoasca vitis L2/L3 larvae**

| Treatment | Dosage | Mortality percentage of *Empoasca vitis* larvae at 7 DAA | Mortality percentage of *Empoasca vitis* larvae at 10 DAA |
|---|---|---|---|
| Untreated | - | 0 | 0 |
| *Beauveria bassiana* CNCM I-2961 spore suspension | 1.0 x 10⁸ CFU/ml | 83 | 91 |
| Lambda cyhalothrin | 75 ml/L | 65 | 91 |

It can be observed from the above table that the efficacy of *Beauveria bassiana* CNCM I-2961 spore in controlling *Empoasca vitis* L2/L3 larvae at 7 DAA stage is better than the chemical insecticide and at par with the chemical insecticide at 10 DAA.

### Example 6 - Efficacy of Beauveria bassiana CNCM I-2961 on Phyllotreta atra adults

Composition used for insect control: Suspension of *Beauveria bassiana* CNCM I-2961 spores prepared in Tween 80. Total CFU count = 1.46 x 10⁹ CFU/ml
Trial method: Lab trial in Petri dishes, 5 replicates, 6 adults/replicate
Adults anesthized with CO² and dipped 5 sec. into prepared suspension
Incubation in climatic room at +21°C, dead adults removed and incubated for sporulation on cadaver: assessment at 19 DA A
Assessment of mortality percentage of *Phyllotreta atra* adults at 5 DAA, 8 DAA and 12 DAA.

**Table 6: Efficacy of Beauveria bassiana CNCM I-2961 on Phyllotreta atra adults**

| Treatment | Dosage | Mortality percentage of *Phyllotreta atra* adults at 5 DAA | Mortality percentage of *Phyllotreta atra* adults at 8 DAA | Mortality percentage of *Phyllotreta atra* adults at 12 DAA |
|---|---|---|---|---|
| Untreated | - | 0 | 0 | 0 |
| *Beauveria bassiana* CNCM I-2961 spore suspension | 1.46 x 10⁹ CFU/ml | 23 | 45 | 62 |

### Example 7 - Efficacy of Beauveria bassiana CNCM I-2960 on Bactrocera oleae adults

Composition used for insect control: Suspension of *Beauveria bassiana* CNCM I-2960 spores prepared in Tween 80. Total CFU count = 9.5 x 10⁷ CFU/ml
Trial method: Lab trial in plastic containers, 5 replicates, 10 adults /replicate
Flies dipped in test solution
Incubation in climatic room at +25°C
Assessment of mortality percentage of *Bactrocera oleae* adults at 10DAT.
DAT = Days after Treatment
Comparative control: Lambda-cyhalothrin

**Table 7: Efficacy of Beauveria bassiana CNCM I-2960 on Bactrocera oleae adults**

| Treatment | Dosage | Mortality percentage of *Bactrocera oleae* adults at 10 DAA |
|---|---|---|
| Untreated | - | 0 |
| *Beauveria bassiana* CNCM I-2960 spore suspension | 9.5 x 10⁷ CFU/ml | 100 |
| Lambda cyhalothrin | 75 ml/L | 100 |

From the above table, it is evident that efficacy of *Beauveria bassiana* CNCM I-2960 in controlling *Bactrocera oleae* adults is at par with the chemical insecticide.

### Example 8 - Efficacy of Beauveria bassiana CNCM I-2960 and Beauveria bassiana CNCM I-2961 on Lasius niger

Composition used for insect control: Suspension of *Beauveria bassiana* CNCM I-2961 spores prepared in Tween 80. Total CFU count = 1.0 x 10⁶ CFU/ml, 1.0 x 10⁷ CFU/ml, and 1.0 x 10⁸ CFU/ml. Suspension of *Beauveria bassiana* CNCM I-2960 spores prepared in Tween 80. Total CFU count = 1.0 x 10⁶ CFU/ml, 1.0 x 10⁷ CFU/ml, and 1.0 x 10⁸ CFU/ml.
Trial method: Lab trial in Petri dishes - 3 replicates - 20 adults / replicate
Composition sprayed on insects
Incubation in climatic room at +24°C with 60% Relative Humidity
Assessments every days until 10 DAA.

**Table 8: Efficacy of Beauveria bassiana CNCM-2961 and Beauveria bassiana CNCM I-2960 on Lasius niger adults**

| Treatment | Dosage | Mortality percentage of *Lasius niger* adults at 10 DAA |
|---|---|---|
| Untreated | - | 0 |
| *Beauveria bassiana* CNCM I-2961 spore suspension | 1 x 10⁶ CFU/ml | 55 |
| *Beauveria bassiana* CNCM I-2961 spore suspension | 1 x 10⁷ CFU/ml | 75 |
| *Beauveria bassiana* CNCM I-2961 spore suspension | 1 x 10⁸ CFU/ml | 84 |
| *Beauveria bassiana* CNCM I-2960 spore suspension | 1 x 10⁶ CFU/ml | 74 |
| *Beauveria bassiana* CNCM I-2960 spore suspension | 1 x 10⁷ CFU/ml | 76 |
| *Beauveria bassiana* CNCM I-2960 spore suspension | 1 x 10⁸ CFU/ml | 91 |

From the above table, it is evident that *Beauveria bassiana* CNCM I-2960 and *Beauveria bassiana* CNCM I-2961 is effective in controlling *Lasius niger* adults.

### Example 9 - Efficacy of Beauveria bassiana CNCM I-2961 (OD) on Aonidiella aurantii in orange crop

Composition used for insect control: OD formulation of *Beauveria bassiana* CNCM I-2961
Water volume: 1500 L/ha - 2000 L/ha (for preparing formulated product dose rate in L/ha)
Trial method: Trial was designed as 4 replicated blocks (Randomized Complete Block design) to achieve more homogeneous conditions. Repetitions for each treatment were spread over the field plot to cover all heterogeneities in the field for each treatment.
Crop stage: BBCH 75 - 76
Application timing: 7 day-interval between A & B, B & C
Assessment of efficacy percentage on *Aonidiella aurantii* count reduction at 7 DA-A, 3 DAB, 7 DA-B, 3 DA-C, 7 DA-C, 14 DA-C
(7 DA-A= 7 days after first application, 3-DA-B= 3 days after second application, 7 DA-B= 7 days after second application, 3 DA-C=3 days after third application, 7DA-C=7 days after third application, 14 DA-C= 14 days after third application)
Assessment based on *Aonidiella aurantii* count on pre-selected 15 shoots of orange crop
Comparative control: Acetamiprid

**Table 9: Efficacy of Beauveria bassiana CNCM I-2961 on Aonidiella aurantii in orange crop**

| Treatment | Dosage rate (ml/L) | Percentage efficacy on *Aonidiella aurantii* count reduction in orange crop | | | | | |
|---|---|---|---|---|---|---|---|
| | | 7 DA-A | 3 DA-B | 7 DA-B | 3 DA-C | 7 DA-C | 14 DA-C |
| Untreated | - | 0 | 0 | 0 | 0 | 0 | 0 |
| *Beauveria bassiana* CNCM I-2961 (1E12 cfu/L) OD | 25 ml/100L (3 applications) | 52 | 63.6 | 73.5 | 83.1 | 88.9 | 92.3 |
| *Beauveria bassiana* CNCM I-2961 (1E12 cfu/L) OD | 50 ml/100L (3 applications) | 55.5 | 65.9 | 77.6 | 84.6 | 88.3 | 93.4 |
| *Beauveria bassiana* CNCM I-2961 (1E12 cfu/L) OD | 75 ml/100L (3 applications) | 61.4 | 72.2 | 81.6 | 90.4 | 95.4 | 97.1 |
| *Beauveria bassiana* CNCM I-2961 (1E12 cfu/L) OD | 100 ml/100L (3 applications) | 75.3 | 86.8 | 92.3 | 96.4 | 98.6 | 99.7 |
| Acetamiprid 200 g/L, SC/SL | 70 ml/100L (1 application) | 67.4 | 73.3 | 82.9 | 86.2 | 89.4 | 93 |

From the above table it is observed that maximum efficacy of *Beauveria bassiana* CNCM I-2961 (1E12 cfu/L) OD on *Aonidiella aurantii* count reduction is reached at 100ml/100L (3 applications) at 14 DA-C which is better than the chemical insecticide

### Example 10 - Efficacy of Beauveria bassiana CNCM I-2961 (OD) on Planococcus citri in mandarin crop

Composition used for insect control: OD formulation of *Beauveria bassiana* CNCM I-2961
Water volume: 1500 L/ha (for preparing formulated product dose rate in L/ha)
Trial method: Trial was designed as 4 replicated blocks (Randomized Complete Block design) to achieve more homogeneous conditions. Repetitions for each treatment were spread over the field plot to cover all heterogeneities in the field for each treatment.
Crop stage: BBCH 72 - 75
Application timing: 7 day-interval between A & B, B & C
Assessment of efficacy percentage on *Planococcus citri* count reduction at 7 DA-A, 3 DA-B, 7 DA-B, 3 DA-C, 7 DA-C, 14 DA-C
(7 DA-A= 7 days after first application, 3-DA-B= 3 days after second application, 7 DA-B= 7 days after second application, 3 DA-C=3 days after third application, 7DA-C=7 days after third application, 14 DA-C= 14 days after third application)
Assessment based on *Planococcus citri* count in pre-selected 15 shoots or 400 fruits of mandarin crop
Comparative control: Acetamiprid and Paraffin oil

**Table 10: Efficacy of Beauveria bassiana CNCM I-2961 on Planococcus citri in mandarin crop**

| Treatment | Dosage rate (ml/L) | Percentage efficacy on *Planococcus citri* count reduction in mandarin crop | | | | | |
|---|---|---|---|---|---|---|---|
| | | 7 DA-A | 3 DA-B | 7 DA-B | 3 DA-C | 7 DA-C | 14 DA-C |
| Untreated | - | 0 | 0 | 0 | 0 | 0 | 0 |
| *Beauveria bassiana* CNCM I-2961 (1E12 cfu/L) OD | 75 ml/100L (3 applications) | 30.53 | 43.3 | 51.12 | 49.42 | 42.41 | 39.55 |
| *Beauveria bassiana* CNCM I-2961 (1E12 cfu/L) OD | 100 ml/100L (3 applications) | 47.7 | 63.01 | 68.77 | 66.81 | 65.49 | 61.93 |
| Acetamiprid 200 g/L, SC/SL | 70 ml/100L (1 application) | 53.31 | 74.01 | 74.47 | 73.99 | 60.08 | 46.47 |
| Paraffin oil 800 g/L, EC | 100 ml/100L (2 applications) | 36.23 | 44.9 | 49.48 | 49.79 | 49 | 44.93 |

From the above table it is observed that maximum efficacy of *Beauveria bassiana* CNCM I-2961 (1E12 cfu/L) OD on *Planococcus citri* count reduction is reached at 100ml/100L (3 applications) at 7 DA-B which is better than the chemical insecticide

### Example 11 - Efficacy of Beauveria bassiana CNCM I-2961 (OD) on Scaphoideus titanus nymph in grapevine crop

Composition used for insect control: OD formulation of *Beauveria bassiana* CNCM I-2961
Water volume: 600 L/ha (for preparing formulated product dose rate in L/ha)
Trial method: Trial was designed as 4 replicated blocks (Randomized Complete Block design) to achieve more homogeneous conditions. Repetitions for each treatment were spread over the field plot to cover all heterogeneities in the field for each treatment.
Crop stage: BBCH 69 - 77
Application timing: 7 day-interval between A & B, B & C
Assessment of efficacy percentage on *Scaphoideus titanus* nymph count reduction at 3 DA-A, 7 DA-A, 3 DA-B, 7 DA-B, 3 DA-C, 7 DA-C, 14 DA-C
(3 DA-A= 3 days after first application, 7 DA-A= 7 days after first application, 3-DA-B= 3 days after second application, 7 DA-B= 7 days after second application, 3 DA-C=3 days after third application, 7DA-C=7 days after third application, 14 DA-C= 14 days after third application)
Assessment based on *Scaphoideus titanus* nymph count in 50 leaves of grapevine crop
Comparative control: Cypermethrin

**Table 11: Efficacy of Beauveria bassiana CNCM I-2961 on Scaphoideus titanus nymph in grapevine crop**

| Treatment | Dosage rate (ml/L) | Percentage efficacy on *Scaphoideus titanus* nymph count reduction in grapevine crop | | | | | | |
|---|---|---|---|---|---|---|---|---|
| | | 3 DA-A | 7 DA-A | 3 DA-B | 7 DA-B | 3 DA-C | 7 DA-C | 14 DA-C |
| Untreated | - | 0 | 0 | 0 | 0 | 0 | 0 | 0 |
| *Beauveria bassiana* CNCM I-2961 (1E12 cfu/L) OD | 0.5 L/ha (3 applications) | 21.2 | 30.5 | 47.8 | 63.1 | 69.5 | 71.1 | 71.1 |
| *Beauveria bassiana* CNCM I-2961 (1E12 cfu/L) OD | 1 L/ha (3 applications) | 25.3 | 35.5 | 52.6 | 65.1 | 68.8 | 71.1 | 71.1 |
| *Beauveria bassiana* CNCM I-2961 (1E12 cfu/L) OD | 1.5 L/ha (3 applications) | 33.9 | 55.1 | 68.4 | 81.8 | 85.5 | 87.1 | 87.1 |
| Cypermethrin 500 g/L, EC | 0.06 L/ha (1 application) | 74.9 | 83.3 | 86.9 | 84.9 | 86.3 | 89.1 | 89.1 |

From the above table it is observed that maximum efficacy of *Beauveria bassiana* CNCM I-2961 (1E12 cfu/L) OD on *Scaphoideus titanus* nymph count reduction is reached at 1.5 L/ha (3 application) which is equivalent to the chemical insecticide

### Example 12 - Efficacy of Beauveria bassiana CNCM I-2961 (OD) on Nasonovia ribisnigri in lettuce crop

Composition used for insect control: OD formulation of *Beauveria bassiana* CNCM I-2961
Water volume: 800 L/ha (for preparing formulated product dose rate in L/ha)
Trial method: Trial was designed as 4 replicated blocks (Randomized Complete Block design) to achieve more homogeneous conditions. Repetitions for each treatment were spread over the field plot to cover all heterogeneities in the field for each treatment.
Crop stage: BBCH 42 - 47
Application timing: 7 day-interval between A & B, B & C
Assessment of efficacy percentage on *Nasonovia ribisnigri* count reduction at 3 DA-A, 7 DA-A, 3 DA-B, 7 DA-B, 3 DA-C, 7 DA-C, 14 DA-C
(3 DA-A= 3 days after first application, 7 DA-A= 7 days after first application, 3-DA-B= 3 days after second application, 7 DA-B= 7 days after second application, 3 DA-C=3 days after third application, 7DA-C=7 days after third application, 14 DA-C= 14 days after third application)
Assessment based on *Nasonovia ribisnigri* count in 20 lettuce plants
Comparative control: *Beauveria bassiana* strain ATCC74040 (2.3E10 cfu/L), OD

**Table 12: Efficacy of Beauveria bassiana CNCM I-2961 on Nasonovia ribisnigri in lettuce crop**

| Treatment | Dosage rate (ml/L) | Percentage efficacy on *Nasonovia ribisnigri* count reduction in lettuce crop | | | | | | |
|---|---|---|---|---|---|---|---|---|
| | | 3 DA-A | 7 DA-A | 3 DA-B | 7 DA-B | 3 DA-C | 7 DA-C | 14 DA-C |
| Untreated | - | 0 | 0 | 0 | 0 | 0 | 0 | 0 |
| *Beauveria bassiana* CNCM I-2961 (1E12 cfu/L) OD | 0.5 L/ha (3 applications) | 52.19 | 48.78 | 71.83 | 74.43 | 81.06 | 55.85 | 46.04 |
| *Beauveria bassiana* CNCM I-2961 (1E12 cfu/L) OD | 0.75 L/ha (3 applications) | 52.61 | 47.9 | 70.97 | 74.65 | 81.81 | 61.72 | 46.94 |
| *Beauveria bassiana* CNCM I-2961 (1E12 cfu/L) OD | 1 L/ha (3 applications) | 57.18 | 53.87 | 73.29 | 77.25 | 83.96 | 67.96 | 53.67 |
| *Beauveria bassiana* ATCC74040, (2.3E10 cfu/L), OD | 11/ha (3 applications) | 54.79 | 52.61 | 69.62 | 71.46 | 79.31 | 59.53 | 44 |

From the above table it is observed that maximum efficacy of *Beauveria bassiana* CNCM I-2961 (1E12 cfu/L) OD on *Nasonovia ribisnigri* count reduction is reached at 1 L/ha (3 applications) at 3 DA-C which is better than the *Beauveria bassiana* strain ATCC74040 (2.3E10 cfu/L), OD

## Claims

1. A method of controlling crop pests and non-crop pests with an entomopathogenic fungus selected from a *Beauveria bassiana* deposited as CNCM I-2960, a *Beauveria bassiana* deposited as CNCM I-2961, or a combination thereof.

2. The method of claim 1, wherein said entomopathogenic fungus is in spore form.

3. The method of claim 1, wherein said entomopathogenic fungus is in mycelial or filamentous form.

4. The method of claim 1, wherein said crop pests comprises crop pests of order selected from the group consisting of Hemiptera, Heteroptera, Homoptera, Coleoptera, Diptera, Lepidoptera, Dictyoptera, Hymenoptera, Acari, Thysanoptera, Trombidiformes and combinations thereof.

5. The method of claim 1, wherein said non crop pests belong to Order selected from the group consisting of Dictyoptera, Hymenoptera, and combinations thereof.

6. The method of claim 1, wherein said method of controlling pests are selected from the group consisting of aphids, stink bugs, leafhoppers, white flies, mites, thrips, beetles, fruit flies, ants, scale insects, moths, mealybugs, cotton leafworms, cotton bollworms, and combinations thereof.

7. The method of claim 1, wherein the concentration of the entomopathogenic fungus applied is from about 1 x 10³ CFU/ml to about 1 x 10¹⁰ CFU/ml, preferably, the concentration of entomopathogenic fungus applied is from about 1 x 10⁵ CFU/ml to about 1 x 10⁹ CFU/ml.

8. The method of claim 1, wherein the entomopathogenic fungus is applied at a rate of about 0.1L/ha to about 10L/ha, preferably at a rate of about 0.5 L/ha to about 2 L/ha.

9. Use of an entomopathogenic fungus selected from a *Beauveria bassiana* deposited as CNCM I-2960 or its spores, or a *Beauveria bassiana* deposited as CNCM I-2961 or its spores, or a combination thereof for controlling or preventing crop pests and non-crop pests, and damage caused by said crop pests and non-crop pests.

10. A composition comprising the entomopathogenic fungus as claimed in claim 1.

11. The composition of claim 10, wherein the amount of entomopathogenic fungus in said composition ranges from about 0.1 % w/w to 99 % w/w of the total weight of the composition.

12. The composition of claim 10, wherein said composition further comprises an agriculturally acceptable excipient.

13. The composition of claim 12, wherein the agrochemically acceptable excipient is present in the composition in a range of about 0.1 % w/w to about 99 % w/w of the total composition.

14. Use of composition as claimed in claim 10, for controlling or preventing crop pests and non-crop pests, and damage caused by said crop pests and non-crop pests.
